# EUROPEAN PATENT SPECIFICATION

(11) **EP 2 737 138 B1**
(45) Date of publication and mention of the grant of the patent: **28.09.2016**
(21) Application number: 11775852.4
(22) Date of filing: 25.07.2011
(51) Int. Cl.: E04B 1/86, B32B 5/26

(54) **METHOD OF MAKING AN INSULATION PANEL AND INSULATION PANEL OBTAINABLE WITH SAID METHOD**
VERFAHREN ZUR HERSTELLUNG EINER DÄMMPLATTE UND MITHILFE DES VERFAHRENS HERSTELLBARE DÄMMPLATTE
PROCÉDÉ DE RÉALISATION D'UN PANNEAU D'ISOLATION ET PANNEAU D'ISOLATION POUVANT ÊTRE OBTENU AVEC LEDIT PROCÉDÉ

(43) Date of publication of application: 04.06.2014
(73) Proprietor: Giemme S.n.c. Di Corradini Marco & C., 41011 Campogalliano (IT)
(72) Inventor: CORRADINI, Marco, I-41011 Campogalliano (IT); YAZON, Vyacheslav, -41011 Campogalliano (IT); SPINELLI, Paolo, I-20125 Milano (IT); SALA, Alessandro Giovanni, I- 24040 Bonate Sopra (IT)
(74) Representative: Modiano, Micaela Nadia
(86) International application number: PCT/IT2011/000264
(87) International publication number: WO 2013/014683

(56) References cited:
- EP-A1- 2 277 691
- EP-A1- 2 281 961
- WO-A1-98/51961
- WO-A1-2006/065904
- GB-A- 2 464 369

## Description

### Technical Field

The present invention relates to a method of making an insulation panel and the insulation panel obtainable with said method.

### Background Art

The use is known of insulating materials that can be applied perimetrically on a building so as to minimize the thermal exchange between the interior and the exterior of the building. The use is moreover known of insulating materials comprising aerogels composed of amorphous silica with a nanoporous structure, that is to say characterized by a distance of around 0.01 micrometers between the particles that it is composed of. Thanks to their nanotechnological structure, aerogels make it possible to achieve, with reduced thicknesses, much higher levels of insulation performance than other insulations of the known type. These aerogels are reinforced, by means of known manufacturing processes, with fibrous fabrics such as for example felted wadding made of glass fiber, polypropylene fiber or polyethylene terephthalate fiber, so as to enable the application of the aerogel on walls or ceilings, giving the final product a form analogous to a layer of soft and flexible fabric that can be adapted to any curvilinear surface. Such reinforced aerogels, such as for example the Spaceloft®, Crygel® and Pyrogel® products made by Aspen Aerogels Inc., are sold in rolls of fabric.

These insulating materials of the known type are not devoid of drawbacks including the fact that they require a step of application of an additional sheet if the reinforced aerogel is placed on walls or ceilings, with a considerable increase in installation costs and times. In fact, due to its soft and fibrous nature, this material is difficult to apply on the lower face of an inclined surface, such as for example lofts or ceilings, since being extremely soft it tends to fall downward under the effect of the force of gravity, creating aesthetically unpleasant flexions between one anchoring point and the next. For eliminating this drawback, adhesion of the aerogel to the wall at a plurality of points is required with a consequent increase in laying time to be added to the time required for the installation of a sheet, or additional material, and subsequent rendering thereof in order to obtain a smooth surface.

In order to prevent these drawbacks products have been developed which comprise a mixture of aerogel with a rigid self-supporting structure, as described in US 2010155644.

These insulating materials of the known type are not devoid of drawbacks, either, including the fact that they still require a step of application of an additional sheet because the reinforced aerogel can be easily damaged as a result of accidental impacts. In fact, such insulation does not offer a surface that is smooth, continuous and compact, but one that is slightly fibrous and that, as a consequence of small accidental impacts, could inevitably become frayed, thus progressively causing the layer of aerogel applied on the wall to deteriorate. The deterioration of the aerogel, or more simply the direct contact therewith, causes the release into the surrounding environment of a considerable quantity of dusts which, in addition to covering the objects near the wall, could be an irritant for the nasal mucous membranes. In order to prevent such deterioration, application of an additional protection wall is required, parallel to the existing wall, so as to form a small interspace in which to accommodate the reinforced aerogel.

The application of an additional wall for protection in specific contexts where the outer aesthetic appearance needs to be preserved, such as for example in historical town centers, can be done only within the living space, thus perceptibly reducing the inner volume available since merely the installation of the wall requires a much higher thickness than that of the layer of aerogel by itself, thus strongly discouraging the user from insulating the building.

EP-A-2 277 691 discloses a thermal and acoustic insulation laminate having a first layer comprising an aerogel, and a second layer comprising an insulating or stabilizing covering layer selected from glass wool, rock wool, slag wool, and wood wool. The layers of the laminate are bound together by using an adhesive and/or by needling, sewing, stapling, and pressing.

### Disclosure of the invention

The aim of the present invention consists in providing an insulation panel that resolves the drawbacks and overcomes the limitations of the known art by enabling a quick and economic installation of the insulation panel itself, without requiring the installation of additional sheets and/or walls.

Within this aim, an object of the present invention is to provide a method of making an insulation panel that is easy to implement, rapid and economically competitive when compared to the known art.

Another object of the invention consists in providing an insulation panel that prevents the release of dust in proximity to the wall where it is installed.

Another object of the invention consists in providing an insulation panel of reduced thickness that minimizes the decrease in inner volume of the dwelling.

Another object of the invention consists in providing an insulation panel that is capable of offering the widest guarantees of reliability and safety in use.

In accordance with the invention, there is provided a method of making an insulation panel, as defined in the appended claims 1-7, and an insulation panel as defined in the appended claims 8-11.

### Brief description of the drawings

Further characteristics and advantages of the invention will become more apparent from the description of preferred, but not exclusive, embodiments of an insulation panel and a method for the production thereof, illustrated by way of non-limiting example in the accompanying drawings wherein:
Figures 1, 2 and 3 are schematic views of successive steps of the method of producing a first embodiment of the insulation panel, according to the invention;
Figure 4 is a partially exploded perspective view of a first embodiment of the insulation panel, according to the invention;
Figure 5 is a partially exploded perspective view of a variation of the first embodiment of the insulation panel shown in Figure 3;
Figure 6 is a partially exploded perspective view of a second variation of the first embodiment of the insulation panel shown in Figure 3;
Figure 7 is a perspective view of a plurality of the first embodiment of the insulation panel applied to a wall, according to the invention;
Figures 8, 9 and 10 are schematic views of successive steps of the method of producing a second embodiment of the insulation panel, according to the invention;
Figures 11 and 12 are perspective views of a second embodiment of the insulation panel applied to a cylindrical duct, according to the invention.

### Ways of carrying out the invention

With reference to the figures, the method of making an insulation panel comprises, starting from a covering sheet 2 made of fibrous material, an adhesive film 3 and a base sheet 4 made of insulating material comprising an aerogel with a microporous amorphous structure associated with a flexible fabric, the following steps.

According to the invention, the production method comprises a first step of making the adhesive film 3 adhere to the covering sheet 2 followed by a step of heating to a temperature that is substantially variable between 170° centigrade and 250° centigrade.

Subsequently, a second adhesion step is executed in which the base sheet 4 is made to adhere to the adhesive film 3, so as to obtain a multilayer structure with the adhesive film 3 in the middle. The multilayer structure is subjected to a step of being compressed to a pressure that is substantially variable between 1 bar and 5 bar in which the adhesion over the entire surface of the adhesive film 3 is consolidated with the covering sheet 2 and with the base sheet 4, forming a single multilayer body.

In particular, the compression step involves the use of a press 5 that comprises a matrix die 6 and a corresponding punch die 7 which are substantially mutually aligned and which, respectively, receive the covering sheet 2 and the base sheet 4 on their facing inner surfaces.

The compression step comes after the heating step if the heating step occurs in adapted furnaces, or it occurs at the same time as the compression step if the matrix die 6 is provided with heating means 8 inside it so as to be able to heat, by contact, the covering sheet 2.

Depending on the presence or otherwise of heating means 8 in the press 5, the production of the insulation panel 1 can occur substantially in two successive stages or in a single stage. Conveniently, if the production occurs in two successive stages, there is a first stage of production in which the first adhesion step and the heating step occur at the same time in adapted furnaces, or temperature-controlled chambers, and a subsequent second stage of production in which the second adhesion step and the compression step occur at the same time in the press 5, where the press 5 uses cold-pressing dies, that is to say a matrix die 6 and a punch die 7 which are internally provided with a coil in which a cooling fluid circulates. In particular, the heating step and the compression step are defined for a period that is substantially less than 1 minute, the period being variable depending on the materials used, in some cases being shortened singly to around 30-45 seconds for each step.

Advantageously, if the production of the insulation panel 1 occurs in a single production stage then the first adhesion step, the heating step, the second adhesion step and the compression step occur at the same time using the heated press 5, which at the same time compresses and heats the covering sheet 2, the adhesive film 3 and the base sheet 4 placed individually upon each other between the matrix die 6 and the corresponding punch die 7 before the processing step. This single processing step is defined for a period that is substantially less than 1 minute, the period being variable depending on the materials used, and in some cases being shortened to around 30-45 seconds.

Moreover, the processing steps described can be extended to include a step of perimetric cutting of the insulation panel 1 in order to adapt the dimensions of the product obtained to the required application. This cutting step can be executed by way of mechanical means arranged on the perimeter of the matrix die, such as for example guillotines or milling cutters, or by way of hydraulic systems, such as for example water jet cutting.

Additionally a cutting step can be provided that is adapted to form holes, or slots, in order to facilitate the final installation of the insulation panel 1.

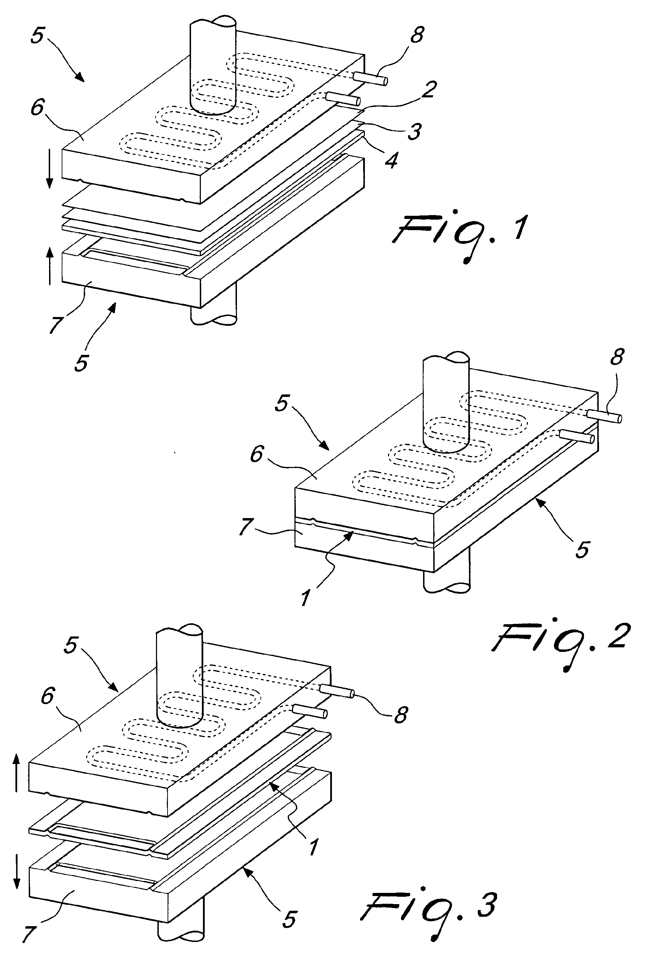

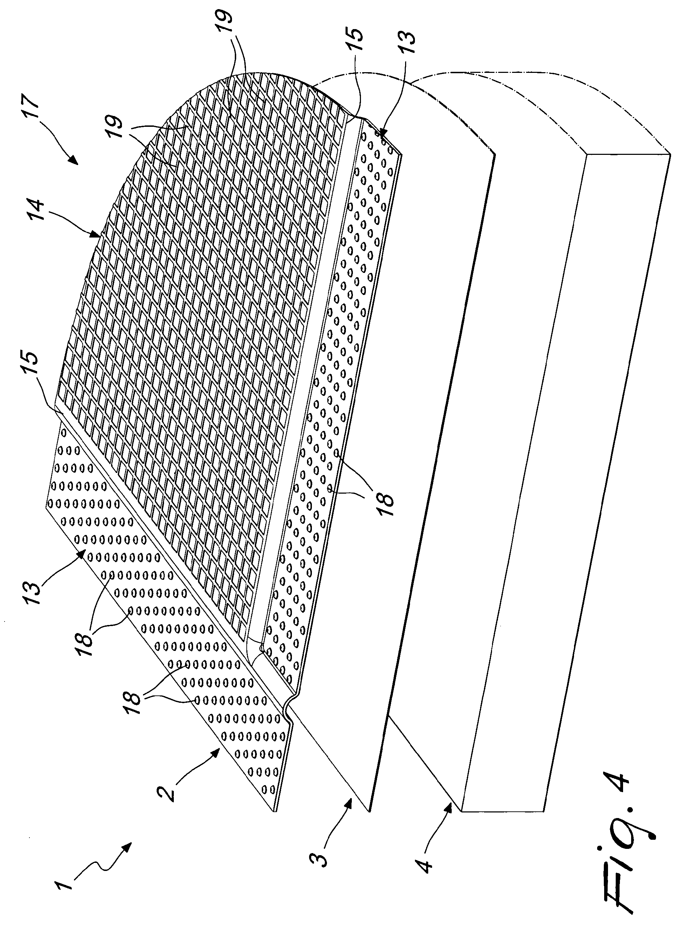

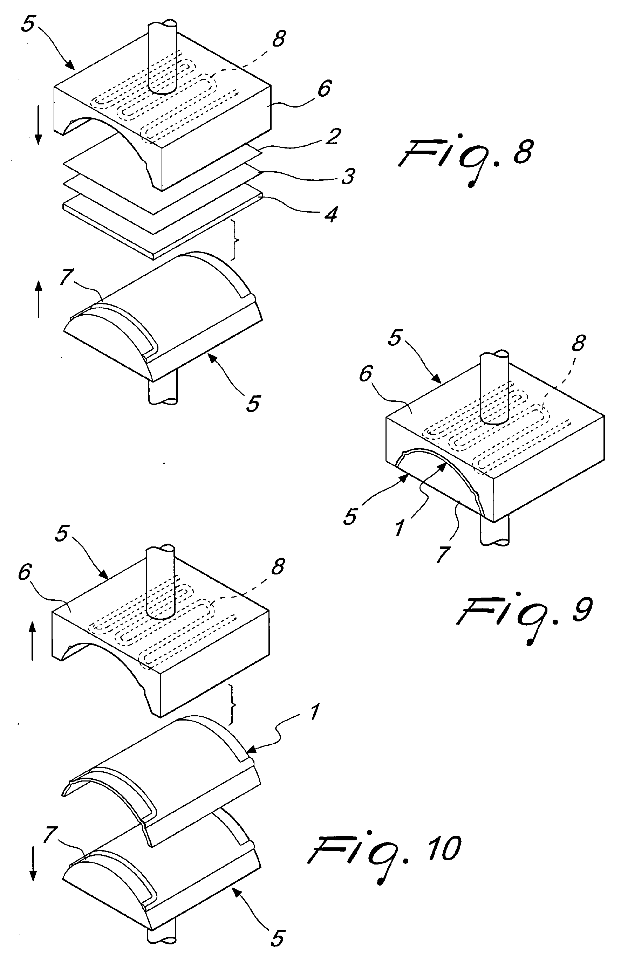

It should be noted moreover that during the compression step the covering sheet 2, preheated or heated during compression, is subjected to plastic deformation. At a certain temperature the covering sheet 2 is deformable and adaptable to planar or curvilinear surfaces or complex three-dimensional shapes, being molded specifically, in this case, to the inner surface of the matrix die 6. After a period of cooling, which can occur at ambient temperatures or by means of cold-pressing dies, the covering sheet 2 stiffens, keeping the three-dimensional shape molded by the matrix die 6. Advantageously, this plastic property makes it possible for the insulation panel 1 to assume different embodiments, such as for example a first planar embodiment, as shown in Figures 1 to 7, or curvilinear, as shown in Figures 8 to 12, according to the end user's requirements.

The insulation panel 1, which can be manufactured with the production method described above, comprises a covering sheet 2 made of fibrous material, an adhesive film 3 and a base sheet 4 made of insulating material comprising an aerogel with a microporous amorphous structure associated with a flexible fabric.

According to the invention, the covering sheet 2 comprises at least one aggregate of fibers selected from the group comprising glass fibers, polypropylene fibers, maize fibers, hemp fibers. The aggregate of fibers can be made up of a single type of fiber or of a mixture composed of two or more types of fiber.

Advantageously, the base sheet 4 based on silicon dioxide has a nanoporous structure with pore dimensions of around 0.01 micrometers. Advantageously the base sheet 4 can be substituted with a layer of Spaceloft®, Crygel® and Pyrogel®, aerogels made and sold by Aspen Aerogels Inc.

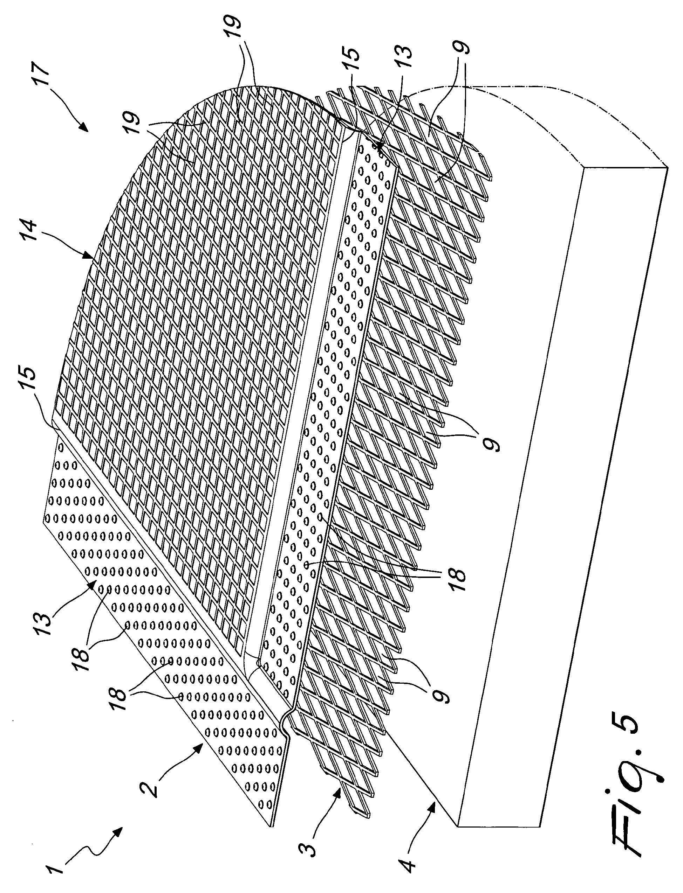

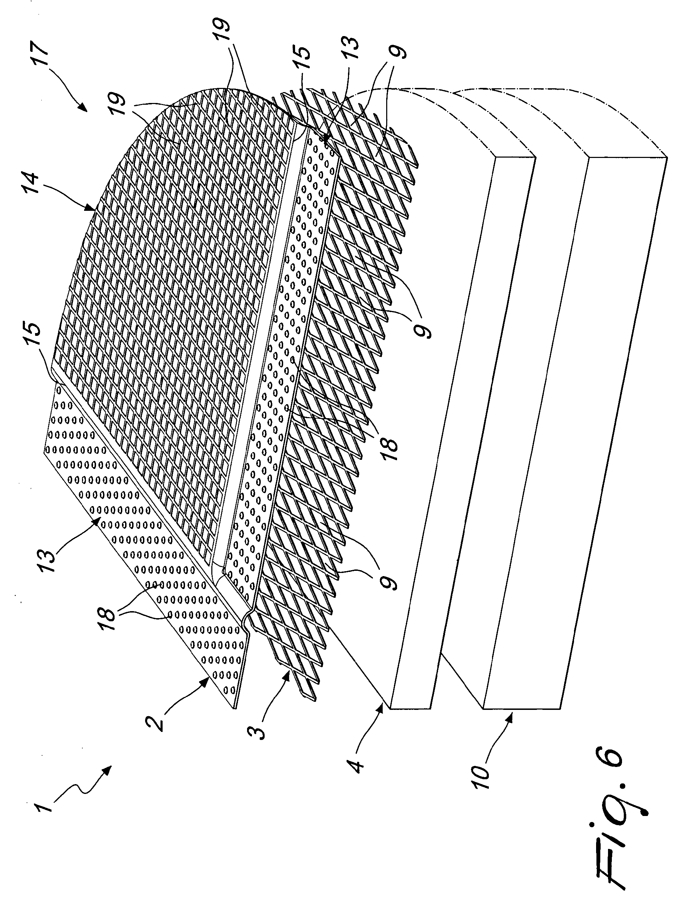

Between the base sheet 4 and the covering sheet 2, the adhesive film 3 is interposed which is adapted to join the sheets 4 and 3. Conveniently, the adhesive film 3 has, as shown in Figures 5 and 6, a plurality of through openings 9 on its surface that are adapted to form a grid surface.

Conveniently, the presence of the plurality of through openings 9 is provided to give the insulation panel 1 high transpirability properties.

In a second variation of the first embodiment, the insulation panel 1 is provided with an additional sheet 10 that can be applied, by way of polyurethane-based adhesive, to the base sheet 4, as shown in Figure 6. In particular, the additional sheet 10 can be applied to a first face 11 of the base sheet 4, opposite to a second face 12 of the base sheet 4 adhering to the adhesive film 3. Moreover, the additional sheet 10 is provided with at least one material that is adapted to the user-required application and selected from a group comprising rock wool, wood fiber, expanded polystyrene, wood beton and/or recycled rubber.

In the first embodiment, the insulation panel 1 has a substantially flat quadrangular shape, comprising perimetrically a plurality of lowered strip portions 13 that are substantially thinner than the remaining central portion 14 of the insulation panel 1.

In particular, at least two of the strip portions 14, which are not consecutive, have at least one guide 15 extending over all of the length of the insulation panel 1.

More precisely, the guide 15 has a substantially curvilinear profile along a plane that is substantially perpendicular to the covering sheet 2 and specifically perpendicular to the direction of extension of the guide 15. The insulation panel 1, moreover, has a thickness along the guide 15 that is substantially identical to the thickness found in the central portion 14.

In addition to the guide 15, the covering sheet 2, particularly on a surface in view 17, has geometric irregularities 18 in relief on the plurality of lowered strip portions 13 and a grid 19, also in relief, on the central portion 14.

Advantageously, the covering sheet 3 has at least one layer of bonding agent 16 placed on the surface in view 17. This layer of bonding agent 16 is made of non-woven fabric or of polyethylene terephthalate.

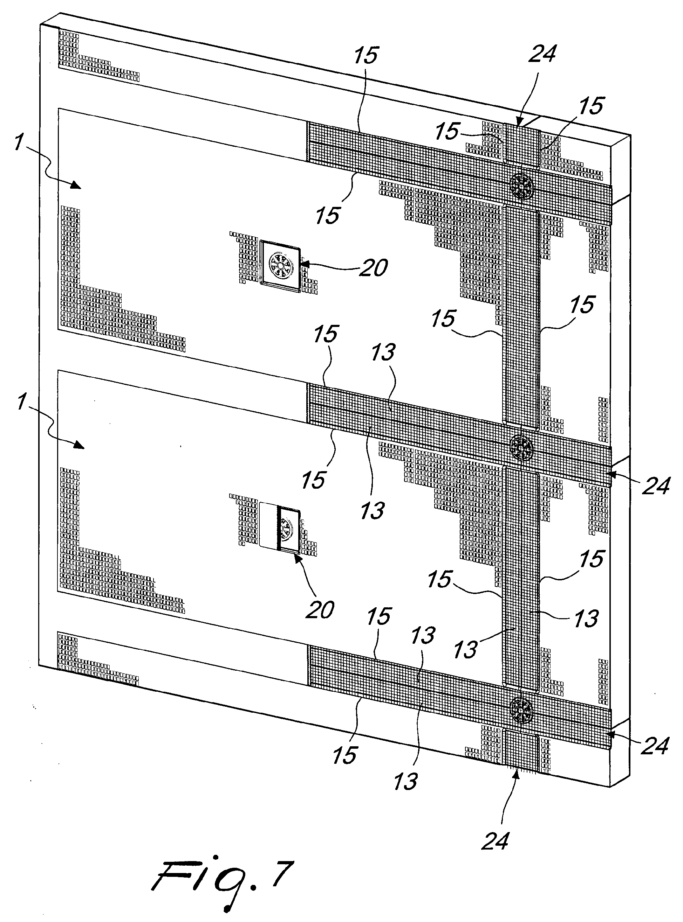

The insulation panel 1, thus described, is brought to the place of installation and fixed by means of glues and subsequently secured through nails or inserts, as shown in Figure 7 and fully discussed in EP-A-2 497 870.

Advantageously, the nails or inserts are accommodated between the corners of the panels, so that four corners of four panels can be fixed with a single head of the insert.

Conveniently, the insulating panels 1 have a central depression 20 for accommodating the head of a further insert and firmly fixing the insulating panels 1 to the wall.

Subsequently a net 24 is laid on the plurality of strip portions 13. This net 24 acts as a bonding agent for spreading the plaster. The rendering of the plaster spread on the surface in view 17 is extremely quick due to the fact that, advantageously, the operator positions the trowel, or other device adapted to rendering, on the lateral guides 15 and quickly eliminates the excess plaster located on the strip portions 13 in a single pass and perfectly coplanar with the central portions 14 of the adjacent panels.

Similarly, the central depression 20 is also covered in plaster, or mortar, and the excess plaster is rapidly eliminated, taking the central portion 14 of the insulation panel 1 as a reference or guide.

Advantageously, the presence of at least one first layer of bonding agent 16 on the covering sheet 2 facilitates the adhesion of the finishing mortar to the insulation panel 1.

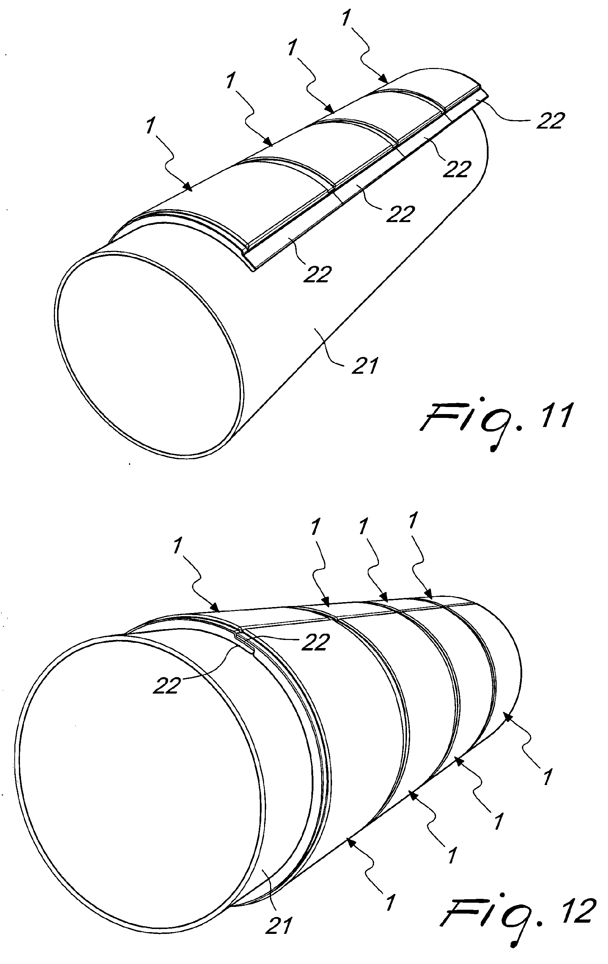

In a second embodiment, the insulation panel 1 has a substantially semicircular shape, as shown in Figures 11 and 12. Each one of the insulating panels 1 has two linear ends 22 on which connections of the male-female type are provided. Advantageously, the insulating panels 1 are positioned consecutively, one after the other, on the circumference of the cylindrical duct 21 so as to completely embrace the outer surface of the duct 21. Conveniently, each male-female connection provided on the connection end 22 enables the slotting together of two insulating panels 1 for the formation of an insulating ring around the cylindrical duct 21. The connection ends 22, in addition to facilitating the installation of insulating panels 1 around the cylindrical duct 21, allow an easy inspection in the event of a presumed breach in the cylindrical duct 21.

In practice it has been found that the method of producing an insulation panel and the panel obtainable with the method, according to the present invention, achieve the intended aim and objects since it makes it possible to produce a high-performing insulation panel quickly and at low cost.

Another advantage of the insulation panel, according to the invention, consists in that it enables a quick installation of the panel, without requiring additional installations of panels, walls or protective sheets.

A further advantage of the insulation panel, according to the invention, consists in that it prevents the release of dust in the event of accidental impact of the panel.

Another advantage of the insulation panel, according to the invention, consists in that it enables installation of an insulation panel inside living spaces without considerably reducing the living space.

A further advantage of the insulation panel, according to the invention, consists in that it enables installations that are very quick compared to the known art, thus considerably reducing installation costs. In fact, the insulation panel thus described can be applied directly on walls or ceilings with only the adhesion provided by glues. This could avoid the installation of fixing screws or inserts. In addition, the insulating panels allow installation on outside walls without requiring installation of a scaffolding, thus considerably reducing costs. Due to their lightness and quick installation, the insulating panels can be installed at different heights on outside walls by means of aerial work platforms, the usage cost of which is much lower than the cost of installation of an outside scaffolding. Moreover, for facilitating and speeding up the step of application, the insulation panel can be provided with a bi-adhesive film of glue applied on the face of the base sheet that is intended to come into contact with the installation surface.

Another advantage of the insulation panel, according to the invention, consists in that it can be adaptable to a plurality of applications, given its high level of deformability. In fact, by means of plastic deformation, it is possible to shape high-performing insulation panels of limited thickness into complex three-dimensional forms for use in applications where a low thermal exchange is required between two adjacent compartments or between the inside and the outside, such as for example the lining of electric appliances, air conditioning and heating systems, refrigeration cells, storage tanks, pipe linings or the automotive field. In particular, in the automotive field, the insulation panel is extremely advantageous if applied on aerodynamic bottoms in proximity to sources of heat (for example in proximity to mufflers and/or engines), vehicle ceilings, refrigerator car linings, camper vans, caravans etc.

A further advantage of the insulation panel, according to the invention, consists in that it can be installed in sectors, or applications, with high thermal swings since the insulation panel has a high degree of dimensional stability under all climate conditions.

The method of making an insulation panel and the insulation panel obtainable with the method thus conceived, are susceptible of numerous modifications and variations, all of which are within the scope of the appended claims.

Moreover, all the details may be substituted by other, technically equivalent elements.

In practice the materials employed, provided they are compatible with the specific use, and the contingent dimensions and shapes, may be any according to requirements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A method of making an insulation panel (1) that comprises a covering sheet (2) made of fibrous material, an adhesive film (3) and a base sheet (4) made of insulating material comprising an aerogel with a microporous amorphous structure associated with a flexible fabric;
the method comprising the steps of:
- a first step of making said adhesive film (3) adhere to said covering sheet (2);
- a second step of making said base sheet (4) adhere to said adhesive film (3);
the method being **characterized in that** said adhesive film (3) is provided with a plurality of through openings (9) on its surface and **in that** it further comprises:
- a step of heating said covering sheet (2) and said adhesive film (3) to a temperature that is substantially variable between 170° centigrade and 250° centigrade; and
- a step of compressing said base sheet (4), said adhesive film (3) and said covering sheet (2) to a pressure that is substantially variable between 1 bar and 5 bar, said compressing step involving using a press (5) comprising a matrix die (6) that receives said covering sheet (2) and a corresponding punch die (7), inserted in said matrix die (6), that compresses said base sheet (4) onto said adhesive film (3) and onto said covering sheet (2).

2. The method according to claim 1, **characterized by** using said matrix die (6) that comprises heating means (8).

3. The method according to one or more of the preceding claims, **characterized in that** said second adhesion step and said compressing step are executed at the same time.

4. The method according to one or more of the preceding claims, **characterized in that** said first adhesion step, said heating step, said second adhesion step and said compressing step are executed at the same time.

5. The method according to one or more of the preceding claims, **characterized in that** it comprises a step of perimetric cutting of said insulation panel (1) following said compressing step.

6. The method according to one or more of the preceding claims, **characterized in that** said heating step is defined for a period that is substantially less than 1 minute.

7. The method according to one or more of the preceding claims, **characterized in that** said compressing step is defined for a period that is substantially less than 1 minute.

8. An insulation panel (1) that is made with a method according to one or more of the preceding claims 1-7, comprising a covering sheet (2) made of fibrous material, an adhesive film (3), and a base sheet (4) made of insulating material comprising an aerogel with a microporous amorphous structure associated with a flexible fabric, said covering sheet (2) comprising at least one aggregate of fibers selected from the group comprising glass fibers, polypropylene fibers, maize fibers, and hemp fibers, and said adhesive film (3) being interposed between said covering sheet (2) and said base sheet (4), **characterized in that** said adhesive film (3) is provided with a plurality of through openings (9) on its surface.

9. The insulation panel (1) according to claim 8, **characterized in that** it comprises an additional sheet (10) that can be applied on a first face, opposite to a second face adhering to said adhesive film (3), of said base sheet (4), said additional sheet (10) being made of at least one material selected from the group comprising rock wool, wood fiber, expanded polystyrene, cork, wood beton, recycled rubber.

10. The insulation panel (1) according to one or more of the preceding claims 8-9, **characterized in that** it has a substantially flat quadrangular shape and comprises on its perimeter a plurality of lowered strip portions (13) that are substantially thinner than the remaining central portion (14) of the insulation panel (1), at least two of said strip portions (14), which are not consecutive, having at least one guide (15) extending over all of the length of the insulation panel (1).

11. The insulation panel (1) according to claim 10, **characterized in that** it comprises at least one layer of bonding agent on a surface in view (17) of said covering sheet (2), said layer of bonding agent being made at least of a material selected from the group comprising non-woven fabric and polyethylene terephthalate.

## Patentansprüche

1. Ein Verfahren zur Herstellung einer Dämmplatte (1), die eine Deckschicht (2) aus faserigem Material, einen Klebstofffilm (3) und eine Grundschicht (4) aus Isoliermaterial umfasst, die ein Aerogel mit einer mikroporösen amorphen Struktur, verbunden mit einem biegsamen Gewebe, umfasst;
wobei das Verfahren folgende Schritte umfasst:
- einen ersten Schritt des Haften machen des Klebstofffilms (3), an der Deckschicht (2);
- einen zweiten Schritt des Haften machen der Grundschicht (4), an dem Klebstofffilm (3);
wobei das Verfahren **dadurch gekennzeichnet ist, dass** der Klebstofffilm (3) an seiner Oberfläche mit einer Vielzahl von Durchgangsöffnungen (9) versehen ist, und dadurch, dass es weiter Folgendes umfasst:
- einen Schritt des Erwärmens der Deckschicht (2) und des Klebstofffilms (3) auf eine Temperatur, die im Wesentlichen zwischen 170°C und 250°C variabel ist; und
- einen Schritt des Zusammendrückens der Grundschicht (4), des Klebstofffilms (3) und der Deckschicht (2) mit einem Druck, der im Wesentlichen zwischen 1 bar und 5 bar variabel ist, wobei der Kompressionsschritt die Verwendung einer Presse (5) beinhaltet, die eine Matrizenform (6) umfasst, welche die Deckschicht (2) aufnimmt, und eine entsprechende Stempelform (7), eingesetzt in die Matrizenform (6), welche die Grundschicht (4) auf den Klebstofffilm (3) und auf die Deckschicht (2) drückt.

2. Das Verfahren gemäß Anspruch 1, **gekennzeichnet durch** Verwendung der Matrizenform (6), die Erhitzungsmittel (8) umfasst.

3. Das Verfahren gemäß einem oder mehreren der obigen Ansprüche, **dadurch gekennzeichnet, dass** der zweite Haftungsschritt und der Kompressionsschritt gleichzeitig durchgeführt werden.

4. Das Verfahren gemäß einem oder mehreren der obigen Ansprüche, **dadurch gekennzeichnet, dass** der erste Haftungsschritt, der Erhitzungsschritt, der zweite Haftungsschritt und der Kompressionsschritt gleichzeitig durchgeführt werden.

5. Das Verfahren gemäß einem oder mehreren der obigen Ansprüche, **dadurch gekennzeichnet, dass** es einen Schritt des Umfangsschneidens der Dämmplatte (1) nach dem Kompressionsschritt umfasst.

6. Das Verfahren gemäß einem oder mehreren der obigen Ansprüche, **dadurch gekennzeichnet, dass** der Erhitzungsschritt für einen Zeitraum definiert ist, der im Wesentlichen weniger als 1 Minute beträgt.

7. Das Verfahren gemäß einem oder mehreren der obigen Ansprüche, **dadurch gekennzeichnet, dass** der Kompressionsschritt für einen Zeitraum definiert ist, der im Wesentlichen weniger als 1 Minute beträgt.

8. Eine Dämmplatte (1), die mit einem Verfahren gemäß einem oder mehreren der obigen Ansprüche 1-7 hergestellt wird und Folgendes umfasst: eine Deckschicht (2) aus faserigem Material, einen Klebstofffilm (3) und eine Grundschicht (4) aus Isoliermaterial, die ein Aerogel mit einer mikroporösen amorphen Struktur, verbunden mit einem biegsamen Gewebe, umfasst, wobei die Deckschicht (2) mindestens eine Aggregation von Fasern umfasst, die gewählt sind aus der Gruppe, die Glasfasern, Polypropylenfasern, Maisfasern und Hanffasern umfasst, und wobei der Klebstofffilm (3) zwischen der Deckschicht (2) und der Grundschicht (4) angeordnet ist, **dadurch gekennzeichnet, dass** der Klebstofffilm (3) an seiner Oberfläche mit einer Vielzahl von Durchgangsöffnungen (9) versehen ist.

9. Die Dämmplatte (1) gemäß Anspruch 8, **dadurch gekennzeichnet, dass** sie eine zusätzliche Schicht (10) umfasst, die auf eine erste Fläche der Grundschicht (4), gegenüber einer zweiten Fläche, die an dem Klebstofffilm (3) haftet, aufgebracht werden kann, wobei die zusätzliche Schicht (10) aus mindestens einem Material besteht, das gewählt ist aus der Gruppe bestehend aus Steinwolle, Holzfaser, geschäumtem Polystyrol, Kork, Holzbeton und recyceltem Gummi.

10. Die Dämmplatte (1) gemäß einem oder mehreren der obigen Ansprüche 8-9, **dadurch gekennzeichnet, dass** sie eine im Wesentlichen flache viereckige Form hat und an ihrem Umfang eine Vielzahl abgesenkter Streifenabschnitte (13) umfasst, die im Wesentlichen dünner sind als der restliche zentrale Teil (14) der Dämmplatte (1), wobei mindestens zwei der Streifenteile (14), die nicht aufeinander folgen, mindestens eine Führung (15) haben, die sich über die gesamte Länge der Dämmplatte (1) erstreckt.

11. Die Dämmplatte (1) gemäß Anspruch 10, **dadurch gekennzeichnet, dass** sie mindestens eine Haftmittelschicht auf einer Oberfläche hat, die der Deckschicht (2) zugewandt ist (17), wobei die Haftmittelschicht aus mindestens einem Material besteht, das gewählt ist aus der Gruppe, die Vliesstoff und Polyethylenterephthalat umfasst.

## Revendications

1. Procédé de fabrication d'un panneau d'isolation (1) qui comprend une feuille de couverture (2) réalisée dans un matériau fibreux, un film adhésif (3) et une feuille de base (4) réalisée dans un matériau isolant qui comprend un aérogel qui présente une structure amorphe microporeuse, associé à un tissu souple ;
le procédé comprenant les étapes suivantes :
- une première étape consistant à faire adhérer ledit film adhésif (3) à ladite feuille de couverture (2) ;
- une deuxième étape consistant à faire adhérer ladite feuille de base (4) audit film adhésif (3) ;
le procédé étant **caractérisé en ce que** ledit film adhésif (3) est doté à sa surface d'une pluralité d'ouvertures traversantes (9), et **en ce qu'**il comprend en outre :
- une étape consistant à chauffer ladite feuille de couverture (2) et ledit film adhésif (3) à une température qui est sensiblement variable entre 170 °C et 250 °C ; et
- une étape consistant à comprimer ladite feuille de base (4), ledit film adhésif (3) et ladite feuille de couverture (2) à une pression qui est sensiblement variable entre 1 bar et 5 bars, ladite étape de compression mettant en oeuvre l'utilisation d'une presse (5) qui comprend une matrice de moule (6) qui reçoit ladite feuille de couverture (2) et une matrice d'emboutissage correspondante (7), insérée dans ladite matrice de moule (6), qui comprime ladite feuille de base (4) sur ledit film adhésif (3) et sur ladite feuille de couverture (2).

2. Procédé selon la revendication 1, **caractérisé par** l'utilisation de ladite matrice de moule (6) qui comprend des moyens de chauffage (8),

3. Procédé selon une ou plusieurs des revendications précédentes, **caractérisé en ce que** ladite deuxième étape d'adhérence et ladite étape de compression, sont exécutées en même temps.

4. Procédé selon une ou plusieurs des revendications précédentes, **caractérisé en ce que** ladite première étape d'adhérence, ladite étape de chauffage, ladite deuxième étape d'adhérence et ladite étape de compression, sont exécutées en même temps.

5. Procédé selon une ou plusieurs des revendications précédentes, **caractérisé en ce qu'**il comprend une étape de découpe périmétrique dudit panneau isolant (1), qui suit ladite étape de compression.

6. Procédé selon une ou plusieurs des revendications précédentes, **caractérisé en ce que** ladite étape de chauffage est définie pendant une période qui est sensiblement inférieure à 1 minute.

7. Procédé selon une ou plusieurs des revendications précédentes, **caractérisé en ce que** ladite étape de compression est définie pendant une période qui est sensiblement inférieure à 1 minute.

8. Panneau d'isolation (1) fabriqué selon un procédé selon une ou plusieurs des revendications précédentes 1 à 7, comprenant une feuille de couverture (2) réalisée dans un matériau fibreux, un film adhésif (3), et une feuille de base (4) réalisée dans un matériau isolant qui comprend un aérogel qui présente une structure amorphe microporeuse, associé à un tissu souple, ladite feuille de couverture (2) comprenant au moins un agrégat de fibres sélectionnées dans le groupe constitué par des fibres de verre, des fibres de polypropylène, des fibres de maïs et des fibres de chanvre, ledit film adhésif (3) étant interposé entre ladite feuille de couverture (2) et ladite feuille de base (4), **caractérisé en ce que** ledit film adhésif (3) est doté à sa surface d'une pluralité d'ouvertures traversantes (9).

9. Panneau d'isolation (1) selon la revendication 8, **caractérisé en ce qu'**il comprend une feuille supplémentaire (10) qui peut être appliquée sur une première face, opposée à une seconde face qui adhère audit film adhésif (3), de ladite feuille de base (4), ladite feuille supplémentaire (10) étant réalisée dans un matériau au moins sélectionné dans le groupe constitué par de la laine de roche, des fibre de bois, du polystyrène expansé, du liège, du béton de bois, du caoutchouc recyclé.

10. Panneau d'isolation (1) selon une ou plusieurs des revendications précédentes 8 à 9, **caractérisé en ce qu'**il présente une forme quadrangulaire sensiblement plate, et **en ce qu'**il comprend sur son périmètre une pluralité de parties de bandes abaissées (13) qui sont sensiblement plus minces que la partie centrale restante (14) du panneau isolant (1), deux au moins desdites parties de bandes (14), qui ne sont pas consécutives, présentant au moins un guide (15) qui s'étend sur toute la longueur du panneau d'isolation (1).

11. Panneau d'isolation (1) selon la revendication 10, **caractérisée en ce qu'**il comprend au moins une couche d'agent de liaison sur une surface en vue (17) de ladite feuille de couverture (2), ladite couche d'agent de liaison étant réalisée au moins dans un matériau sélectionné dans le groupe constitué par un tissu non tissé et un polyéthylène téréphtalate.
